# EUROPEAN PATENT APPLICATION

(11) **EP 4 276 689 A1**
(43) Date of publication of application: **15.11.2023**
(21) Application number: 22305720.9
(22) Date of filing: 13.05.2022
(51) Int. Cl.: G06K 19/077

(54) **RSIM STAND ALONE MANUFACTURING WITH LAMINATION AND WITHOUT INDEXATION**

(71) Applicant: Thales Dis France SAS, 92190 Meudon (FR)
(72) Inventor: DOSSETTO, Lucile, 83270 SAINT CYR SUR MER (FR); OTTOBON, Stéphane, 83270 SAINT CYR SUR MER (FR); AUDOUARD, Laurent, 13400 AUBAGNE (FR); ROBERTET, Laurence, 13400 AUBAGNE (FR)
(74) Representative: Castelo, Jérôme

(57) **Abstract**

A method of producing a smart card (1) such as a SIM card extending along an extension direction (E) comprises the steps of providing at least one reel tape (2) extending along a longitudinal direction (L), and providing a plurality of electronic chips (3) on the reel tape (2). The reel tape (2) comprises at least one electrically conductive layer (4) and at least one dielectric layer (5). The electronic chips (3) are in connection with the electrically conductive layer (4) of the reel tape (2). The method further comprises the step of laminating at least one card body layer (6) to the reel tape (2). The card body layer (6) extends entirely across the electronic chips (3) when seen along the longitudinal direction (L).

## Description

### TECHNICAL FIELD

The present invention relates to a method of producing a smart card such as a SIM card according to claim 1.

### PRIOR ART

Current methods of manufacturing smart cards such as Subscriber Identity Module (SIM) cards involve a lot of manufacturing steps such as module assembly, card molding, embedding of the module in the smart card, printing of the smart card, etc. Furthermore, the manufacturing typically requires a lot of material. For instance, in order to generate a smart card in a small format such as 2FF, 3FF or 4FF, a smart card in a large format such as 1 FF is produced in a first step and which is thereafter reduced into the smaller formats, wherein only a part of the originally large card is used and a lot of material is discarded. These processes are not environment friendly and costly.

### SUMMARY OF THE INVENTION

It is an object of the present invention to provide a method of manufacturing a smart card that overcomes the drawback of the prior art. In particular, it is an object to provide a method of manufacturing a smart card that requires fewer material as well as manufacturing steps and is less costly.

This object is achieved with a method according to claim 1. In particular, a method of producing a smart card such as a SIM card extending along an extension direction is provided. The method comprises the steps of providing at least one reel tape extending along a longitudinal direction, and providing a plurality of electronic chips on the reel tape. The reel tape comprises at least one electrically conductive layer and at least one dielectric layer. The electronic chips are in connection with the electrically conductive layer of the reel tape. The method further comprises the step of laminating at least one card body layer to the reel tape. The card body layer extends entirely across the electronic chips when seen along the longitudinal direction.

Thus, a plurality of electronic chips are provided on the reel tape, and wherein said electronic chips are covered by the card body layer extending across the electronic chips. To this end it is particularly preferred that the electronic chips are enclosed by the card body layer and the reel tape. In other words, the electronic chips are preferably received within a space being confined by the reel tape and the card body layer being laminated to the reel tape.

It is particularly preferred that the card body layer constitutes a card body of the final smart card as it is known in the card industry. That is to say, the present invention is based on the insight that the final smart card can be directly assembled in reel, wherein fewer method steps are required since steps such as embedding and printing steps are avoided and a material consumption is reduced since the manufacturing of a large smart card such as the 1FF smart card and a subsequent reduction to a smaller smart card is dispensed with. In fact, since less material is required such as less polymer, adhesive, ink, etc. as typically required in the manufacturing of smart cards the method according to the present invention is more environment friendly and cost effective. It furthermore allows reducing the transport CO₂ costs as the smart card in reel has a much lighter weight.

The extension direction of the smart card extends from a bottom side of the smart card towards a top side of the smart card. In other words, the extension direction can be seen as a vertical direction of the smart card. In the present case, the electrically conductive layer of the reel tape preferably provides the top side of the smart card and the card body layer preferably provides the bottom side of the smart card.

With respect to the extension direction of the smart card the dielectric layer is preferably arranged above the electrically conductive layer and the card body layer is arranged above the dielectric layer. That is, the card body layer is preferably arranged opposite to the top side of the smart card and thus opposite to the electrically conductive layer with respect to the longitudinal direction.

It should be noted that explanations made with regard to an extension along the longitudinal direction preferably likewise apply to an extension along a transverse direction extending perpendicular to the longitudinal direction as well as perpendicular to the extension direction. For instance, the card body layer extending entirely across the electronic chips when seen along the longitudinal direction preferably extends entirely across the electronic chips when seen along the transverse direction as well.

The electrically conductive layer preferably comprises separated contacts and is particularly preferably configured to establish an electrical connection with a smart card contact connector respecting, for instance, an ISO standard. The electrically conductive layer preferably is a copper layer and the separation of the contacts can be achieved by etching the electrically conductive copper layer or by stamping or the like as it is known in the art.

The electronic chip preferably is an electronic chip that is well-known in the art and/or that is commercially available. The electronic chip is preferably configured for applications in the SIM card market or the banking market or the identity market.

It is preferred that exactly one card body layer is provided. That is to say, the method according to the invention allows the production of smart cards comprising a single laminated layer, the said card body layer, only. This simplifies the manufacturing method even more. However, it should be noted that two or more card body layers could be provided, if desired. Said two or more card body layers are preferably laminated to one another and are arranged above one another with respect to the extension direction.

In the event of a single card body layer, the single card body layer preferably constitutes an outermost layer of the smart card. Additionally or alternatively, the card body layer is preferably configured to cover the electronic chips towards an outside.

The card body layer preferably is a continuous layer and/or is preferably free from apertures or the like.

A continuous card body layer is understood as a layer that does not comprise any apertures or the like. Hence, and unlike in solutions of the prior art, the electronic chips are not arranged within apertures of the card body layer. Instead, the card body layer is laminated fully across the electronic chips, wherein an indexation or registration between the electronic chips and the apertures that would be necessary if the electronic chips were to be arranged within apertures of the card body layer can be dispensed with. The method according to the invention therefore enables a facilitated manufacturing also in this regard.

At least one encapsulation element is preferably provided, and wherein the encapsulation element at least partially encapsulates the electronic chips. The encapsulation element preferably corresponds to a resin.

That is, the electronic chips can be at least partially encapsulated by a resin or the like. To this end it is preferred to use a resin that is well-known in the art such as a UV-curing resin, e.g. an epoxy resin or a urethane resin, or a thermal resin. Said encapsulation element thus serves the purpose of protecting the electronic chips.

However, it is likewise conceivable that the electronic chips are not encapsulated by an encapsulation element. In this case, it is preferred that the card body layer is in immediate contact with the electronic chips, in particular with top sides of the electronic chips facing the card body layer.

The absence of an encapsulation element is beneficial with regard to a so-called bump in the card body layer, i.e. a deformation or a protrusion being formed in and/or by the card body layer as a result of the encapsulation element exerting a pressure on the card body layer. Namely, the encapsulation element typically presses against a bottom side of the card body layer facing the encapsulation element, whereupon the bump is formed in and/or by the card body layer. As a result, a top side of the card body layer protrudes away from the encapsulation element and towards an outside of the smart card.

However, and as will be outlined in detail below, the method according to the invention provides several solutions that result in a reduction or even absence of such a bump. It should be noted that only one of the solutions is implemented in the method of manufacturing the smart cards or that a combination of two or more solutions is implemented.

The encapsulation element can be provided on the electronic chips only, in particular on the top sides of the electronic chips and/or on bottom sides of the electronic chips. Alternatively, the encapsulation element can extend at least partially along the electronic chips and further at least partially along the dielectric layer and/or the electrically conductive layer when seen along the longitudinal direction.

That is, in the event that an encapsulation element is present, it is conceivable that said encapsulation element is provided only on the top sides and/or on the bottom sides of the electronic chips. This minimizes a spatial expansion of the encapsulation element and thereby minimizes or even prevents the formation of the bump in the card body layer.

However, it is likewise conceivable that the encapsulation element is provided not only on the top sides and/or the bottom sides of the electronic chips but furthermore at least regionally also between the card body layer and the reel tape, in fact between the card body layer and the dielectric layer and/or between the card body layer and the electrically conductive layer.

At least one adhesive element is preferably provided between the card body layer and the reel tape when seen along the extension direction. The adhesive element can be a continuous layer that continuously extends along the longitudinal direction and/or across the electronic chips when seen along the longitudinal direction. Alternatively, the adhesive element can be an intermittent layer comprising a plurality of apertures being arranged along the longitudinal direction and/or at least partially congruent with the electronic chips when seen along the extension direction.

As mentioned earlier, it is conceivable that the card body layer can be in immediate contact with the electronic chips, in which case no adhesive element is present. In this case, the card body layer is preferably directly laminated onto the reel tape, in particular onto the dielectric layer of the reel tape. To this end it is particularly preferred that the card body layer is a so-called pre-preg layer, wherein the provision of an adhesive element can be dispensed with since the pre-preg material of such a layer is tacky (so-called B-stage state). The card body layer being a pre-preg layer comprises or consists of pre-impregnated fibers and a partially cured polymer matrix when being laminated to the reel tape. That is, the card body layer can comprise or consist of a composite material comprising "pre-impregnated" fibers and a partially cured polymer matrix, such as epoxy or phenolic resin, or even thermoplastic mixed with liquid rubbers or resins. Hence, the card body layer being a prepeg layer is not a completely polymerized layer when being laminated onto the reel tape. As mentioned earlier, the card body layer being a pre-preg layer has the advantage of being tacky. As such, the provision of an adhesive element for lamination can be dispensed with. A complete polymerization of the pre-preg layer is preferably accomplished at the end of the lamination of the card body layer and before the singulation, see further below. The complete polymerization of the card body layer is preferably done by baking, i.e. by heating the layer in order to cross-link the polymer(s). In particular, it is preferred to apply a temperature during a period of time, and wherein the temperature is kept constant or varied. However, and as will be explained in greater detail below, the card body layer can likewise comprise or consist of different components.

However, it is likewise conceivable that an adhesive element is present. The adhesive element preferably corresponds to an adhesive element being known in the state of the art such as hot melt. The adhesive element preferably extends at least partially along the card body layer and the reel tape, in particular the dielectric layer of the reel tape, when seen along the longitudinal direction. It is furthermore preferred that the adhesive element extends at least partially and preferably entirely along the electronic chips, in particular the top sides of the electronic chips, when seen along the longitudinal direction.

A thickness of the adhesive element with respect to the extension direction can equal to or can be larger than a thickness of an electronic packaging being arranged above the dielectric layer of the reel tape with respect to the extension direction. The electronic packaging preferably comprises the electronic chip, any adhesive elements, any encapsulation element, and the dielectric layer. Expressed with terms commonly used in the field of the art, the electronic packaging preferably comprises the so-called die (i.e. the electronic chip), any die attachment glue (i.e. the adhesive element(s)), and any protective resin (i.e. the encapsulation element). As such, the thickness of the electronic packaging being arranged above the dielectric layer of the reel tape with respect to the extension direction preferably corresponds to a distance between the dielectric layer, in particular an upper surface of the dielectric layer that faces towards the card body layer, and an upper surface of the encapsulation element, if present. The upper surface of the encapsulation element is facing the card body layer. Additionally or alternatively, the thickness of the adhesive element with respect to the extension direction preferably is least 35 micrometer or more. A standard thickness of the adhesive element in the field of the art is 35 micrometer. Thus, the thickness of the adhesive element according to the invention preferably equals to or is larger than the standard thickness. A particularly preferred thickness of the adhesive element is between 35 micrometer and 200 micrometer. Additionally or alternatively, the thickness of the adhesive element with respect to the extension direction can vary when seen along the longitudinal direction. In fact, the thickness of the adhesive element in the region of the dielectric layer preferably is larger than the thickness of the adhesive element in the region of the electronic chips. A preferred thickness of the electronic packaging being arranged above the dielectric layer of the reel tape with respect to the extension direction is in the range of 100 micrometer to 250 micrometer.

By using an adhesive element that could have a thickness that equals to or is larger than a thickness of the electronic packaging being arranged above the dielectric layer with respect to the extension direction, a bump that would otherwise be formed in the card body layer by the encapsulation element in the absence of said adhesive element is prevented. That is, the thickness of the adhesive element with respect to the extension direction can be seen as incorporating and/or swallow the bump.

To this end it is conceivable that a thickness of the adhesive element with respect to the extension direction is constant. However, it is likewise conceivable that the thickness of the adhesive element with respect to the extension varies. In particular, in the event of a varying thickness it is preferred that the thickness of the adhesive element is larger in the region of the dielectric layer than in the regions of the electronic chips. Said variation of the thickness is preferably associated with the lamination of the card body layer to the dielectric layer, wherein the thickness of the adhesive element is different in the region of the dielectric layer due to the lamination step. In this case it is preferred that the thickness of the adhesive element in the region of the dielectric layer is at least 35 micrometer and/or in the range of 35 micrometer to 200 micrometer with respect to the extension direction. The thickness of the adhesive element in the region of the electronic chips preferably is 200 micrometer or smaller, such as 150 micrometer or smaller, and preferably 100 micrometer or smaller. It should be noted here that other thicknesses are of course likewise conceivable that depend, for instance, on a thickness of the encapsulation element and/or on a volume of the resin being dispensed for forming the encapsulation element.

It should furthermore be noted that the thickness of the adhesive element could however likewise be smaller than the thickness of the electronic packaging being arranged above the dielectric layer with respect to the extension direction. In this case it is preferred that the bump is minimized according to one or more other ways, see below.

The card body layer is preferably heated during its lamination to the reel tape to a temperature being in the range of or greater than a glass-transition temperature of the card body layer.

The glass-transition temperature characterizes the temperature or range of temperatures over which a glass transition occurs. The glass transition, also known as glass-liquid transition, is a gradual and reversible transition from a hard and relatively brittle "glassy" state into a viscous or rubbery state as the temperature is increased.

Hence, by heating the card body layer in the range of, i.e. close to, or above its glass-transition temperature during the lamination process softens the card body layer, the card body layer is rendered soft or deformable, whereby a bump that would otherwise be formed is minimized or even prevented since said card body layer can fit with a shape of the bump, i.e. it can absorb the bump.

In this regard it is preferred that the card body layer consists of one or more materials having a glass-transition temperature being ambient temperature, preferably 20°C, or more, such as being in the range of 20°C and 220°C, more preferably in the range of 100 °C to 220°C.

The card body layer preferably comprises or consists of at least one polymer having a glass-temperature in said range. Said at least one polymer preferably is a thermoplastic polymer and/or a transparent polymer. Examples of conceivable materials the card body layer can consist of are polyvinyl acetate (PVA or PVAc) and/or polyamide and/or polymethylpentene (PMP) and/or polyethylene terephthalate (PET) and/or polyvinyl chloride (PVC) and/or polystyrene (PS) and/or polyacrylonitrile (PAN) and/or poly(methyl methacrylate) (PMMA) and/or polycarbonates (PC). However, other materials are likewise conceivable.

The card body layer is preferably configured to deform and/or preferably comprises or consists of a soft material and/or preferably comprises or consists of at least one elastomer or a foam film.

By using a soft card body layer or a card body layer that can deform, a bump that would otherwise be formed is minimized or even prevented since said deforming card body layer fits with a shape of the bump, i.e. it can incorporate and/or swallow the bump.

To this end it is preferred that the card body layer comprises or consists of a soft material, an elastomer or a foam film that provide the desired deformation capabilities. Preferred soft materials have a Shore A hardness being smaller than 60, preferably being smaller than 55, and particularly preferably being smaller than 50. To this end it is particularly preferred that the card body layer comprises or consists of silicone as soft material.

A thickness of the dielectric layer preferably equals to or is larger than a thickness of the electronic chips when seen along the extension direction.

As will be explained further below, the electronic chips can be at least partially embedded within the dielectric layer of the reel tape. By providing the dielectric layer with a thickness that equals to or is larger than the thickness of the electronic chips, a protrusion of the electronic chips above the dielectric layer with respect to the extension direction is prevented. Consequently, a protrusion of the encapsulation element and thus a bump is minimized or even prevented as well.

A thickness of the electronic chips is preferably smaller than a thickness of the dielectric layer with respect to the extension direction. The thickness of the electronic chips is preferably smaller than 150 micrometer with respect to the extension direction. The thickness of the electronic chips is more preferably 100 micrometer or less with respect to the extension direction.

That is, by using electronic chips having a reduced thickness a protrusion of the electronic chips above the dielectric layer with respect to the extension direction is minimized or prevented. Consequently, a protrusion of the encapsulation element and thus a bump is minimized or even prevented as well.

A thickness of the dielectric layer being usually used is 110 micrometer with respect to the extension direction. As such, it is preferred to provide electronic chips having a thickness of 100 micrometer or less with respect to the extension direction.

The electronic chips are preferably electrically connected to the electrically conductive layer of the reel tape before lamination of the card body layer. The electronic chips can be electrically connected to the electrically conductive layer of the reel tape via wire bonding or in a flip chip process.

The flip chip process is well-known in the art and can be performed by i) bumping the electronic chips, to thereafter ii) pick and place the bumped chips "face-down" to a substrate or board such as to the electrically conductive layer of the reel tape, and to thereafter iii) attach the electronic chips for instance via a non-conductive glue or an anisotropic conductive plate, and to thereafter iv) cure them. By electrically connecting the electronic modules to the electrically conductive layer in the flip chip process a bump is minimized since connecting wires that would be used e.g. in wire bonding can be dispensed with.

The electrically conductive layer preferably is a continuous layer. The dielectric layer can be a continuous layer, wherein the electronic chips are preferably arranged on the dielectric layer. Alternatively, the dielectric layer can be an intermittent layer comprising a plurality of apertures, wherein the electronic chips are preferably at least partially arranged within apertures of the dielectric layer

The continuous electrically conductive layer does not comprise any apertures or the like being configured to at least partially receive the electronic chips. Instead, the continuous electrically conductive layer preferably merely comprises engravings that form the separate contacts mentioned initially.

The continuous dielectric layer does not comprise any apertures or the like being configured to at least partially receive the electronic chips as well. In this case, it is preferred that the electronic chips are arranged on a surface of the dielectric layer. However, and as mentioned earlier, it is likewise conceivable that the dielectric layer is an intermittent layer that comprises a plurality of apertures, and wherein the electronic chips are at least partially arranged, i.e. embedded, within said apertures. In any case it is conceivable that the dielectric layer comprises openings that allow a connection of the electronic chips to the electrically conductive layer via wires, for instance. That is, the dielectric layer could comprise openings that enable a wire bonding of the electronic chips to the electrically conductive layer.

The plurality of electronic chips can be electrically personalized in reel. Additionally or alternatively a plurality of graphical personalization elements can be provided on and/or in the card body layer in reel. The graphical personalization elements are preferably arranged at least partially congruent with the electronic chips when seen along the extension direction.

That is, an electrical personalization of the electronic chips can be done with a very high throughput due to the electronic chips being arranged on the reel tape and thus in a reel format. Consequently, an individual personalization of the electronic chips on individual smart cards as it is currently done in the state of the art can be dispensed with.

Furthermore, graphical personalization elements such as prints or embossings or the like can be generated on and/or in the card body layer. These graphical personalization elements can again be generated with a high throughput due to the reel format.

Further personalization of the smart cards could be provided by the reel tape. For instance, the electrically conductive layer of the reel tape could be customized with branding of the final customer, or it could be coloured, etc.

The method preferably further comprises the step of singulation, whereby individual smart cards comprising a single electronic chip are obtained. The singulation is preferably performed by cutting, laser or grinding and/or in a single steps or in two steps or more.

The singulation is particularly preferably performed into a particular format being associated with end-use of the smart card. For instance, it is preferred that the reel tape, the card body layer and the plurality of electronic chips are singulated into a form factor of a SIM card such as the 4FF format in the event that the smart card shall be used as a SIM card in a mobile phone. However, a singulation into other form factors or formats are likewise conceivable. For instance, the smart card can be manufactured in the format 1FF, ID1 UICC, 3FF, etc., if desired.

The individual smart cards preferably comprise a card body, and wherein the card body layer constitutes said card body. Furthermore, and as mentioned earlier, the card body layer preferably constitutes a bottom side of the smart card, and the electrically conductive layer of the reel tape preferably constitutes a top side of the smart card.

Consequently, it is preferred that a thickness of these components after lamination are compliant with standards of smart cards. For instance, the smart cards can be a so-called card or SIM with the dimensions of 86 x 54 x 0,76 mm. Likewise, the smart cards can be so-called Mini SIM or 2FF with the dimensions of 25 x 15 x 0,76 mm. Likewise, the smart cards can be so-called Micro SIM or 3FF with the dimensions of 15 x 12 x 0,76 mm. Likewise, the smart cards can be so-called Nano Sim or 4FF with the dimensions of 12,3 x 8,8 x 0,67 mm. For instance, in the latter case a total thickness of the smart card after lamination and when seen along the extension direction is 0.67 millimeter. However, the method according to the invention allows the manufacturing of smart cards having other or more complex shapes as well.

Hence, the method according to the invention allows the direct manufacturing of smart cards that can be readily used in their intended final applications, and wherein manufacturing steps such as card bodies lamination or embedding into cavities of card bodies as it is the case in the prior art solutions are dispensed with. Thereby, the quantity of the needed raw materials is significantly reduced as well. Furthermore, the method according to the invention allows the manufacturing of the smart cards with standard equipment as it is currently used in the card industry.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a cross-sectional view through a reel tape comprising an electronic chip during the manufacturing of a smart card according to the invention;
- Fig. 2: shows a cross-sectional view through a reel tape comprising an electronic chip and a card body layer being laminated to the reel tape comprising the electronic chip according to figure 1;
- Fig. 3: shows a cross-sectional view through a reel tape comprising an electronic chip and a card body layer being laminated to the reel tape comprising the electronic chip according to figure 1, wherein a bump in the card body layer is minimized according to a first aspect;
- Fig. 4: shows a cross-sectional view through a reel tape comprising an electronic chip and a card body layer being laminated to the reel tape comprising the electronic chip according to figure 1, wherein a bump in the card body layer is minimized according to another aspect;
- Fig. 5: shows a cross-sectional view through a reel tape comprising an electronic chip and a card body layer being laminated to the reel tape comprising the electronic chip according to figure 1, wherein a bump in the card body layer is minimized according to another aspect;
- Fig. 6: shows a cross-sectional view through a reel tape comprising an electronic chip and a card body layer being laminated to the reel tape comprising the electronic chip according to figure 1, wherein a bump in the card body layer is minimized according to another aspect;
- Fig. 7: shows a bottom view on smart cards during manufacturing according to the invention, wherein contact sides of the smart cards are visible;
- Fig. 8: shows a top view on a reel tape according to the invention, wherein a plurality of electronic chips are provided sequentially and in five lines;
- Fig. 9: shows a top view of a smart card according to the invention;
- Fig. 10: shows a bottom view of a smart card according to the invention, wherein a graphical personalization element is provided.

### DESCRIPTION OF PREFERRED EMBODIMENTS

Various aspects of the present invention shall be illustrated with reference to the figures.

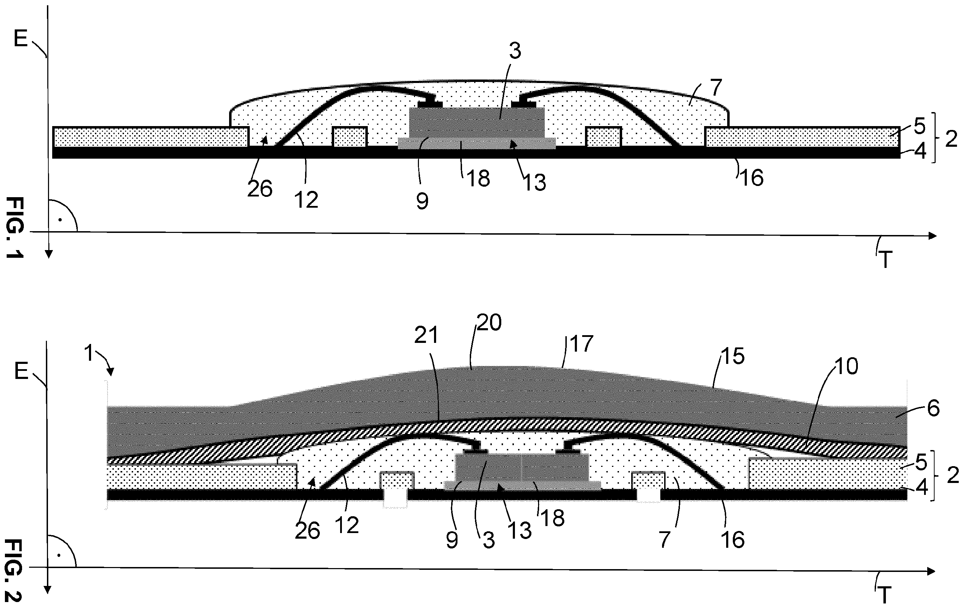

As follows from figures 1 to 6, the present invention is based on the insight that smart cards 1 such as SIM cards can be manufactured in reel, wherein electronic chips 3 are arranged on a reel tape 2 comprising a dielectric layer 5 and an electrically conductive layer 4 and furthermore extending along a longitudinal direction L, and wherein a card body layer 6 is laminated onto the reel tape 2.

As follows from these figures, the smart cards 1 extend along an extension direction E that extends from a bottom side 15 of the smart card 1 towards a top side 16 of the smart card 1. Said extension direction E can be seen as a vertical direction of the smart card 1. In the depicted examples, the electrically conductive layer 4 of the reel tape 2 provides the top side 16 of the smart card 1 and the card body layer 6 provides the bottom side 15 of the smart card 1. With respect to the extension direction E of the smart card 1 the dielectric layer 5 is arranged above the electrically conductive layer 4 and the card body layer 6 is arranged above the dielectric layer 5.

The card body layer 6 extends entirely across the electronic chips 3 when seen along the longitudinal direction L as well as when seen along a transverse direction T extending perpendicular to the longitudinal direction L as well as extending perpendicular to the extension direction E. Thus, the electronic chips 3 are covered by the card body layer 6 extending across the electronic chips 3 and are furthermore received within a space being confined by the reel tape 2 and the card body layer 6 being laminated to the reel tape 2. As furthermore follows from figures 2 to 6, the card body layer 6 is a continuous layer that does not comprise any apertures or the like but which is laminated fully across the electronic chips 3.

In these figures the electrically conductive layer 4 of the reel tape 2 is a continuous layer that continuously extends along the longitudinal direction L of the reel tape 2 as well as along the transverse direction T. The electrically conductive layer 4 merely comprises engravings that form separate contacts 19. The dielectric layer 5 of the reel tape 2 is an intermittent layer that comprises a plurality of apertures 13 being arranged along the longitudinal direction L of the reel tape 2. The electronic chips 3 are arranged on the electrically conductive layer 4 of the reel tape 2 and are furthermore at least partially received within the apertures 13 of the dielectric layer 5. In addition, the electronic chips 3 are electrically connected to the electrically conductive layer 4 of the reel tape 2 via wire bonding wires 12 as well as via an adhesive element 18 in the form of glue. The apertures 13 are also referred to as central windows or window holes and correspond to the area under the electronic chip 3 and the glue 18. Additionally, apertures 26 corresponding to bonding holes for the wire bonding are provided. In all depicted embodiments there is provided an encapsulation element 7 that at least partially encapsulates the electronic chips 3. Here, said encapsulation element 7 is a resin which serves the purpose of protecting the electronic chips 3.

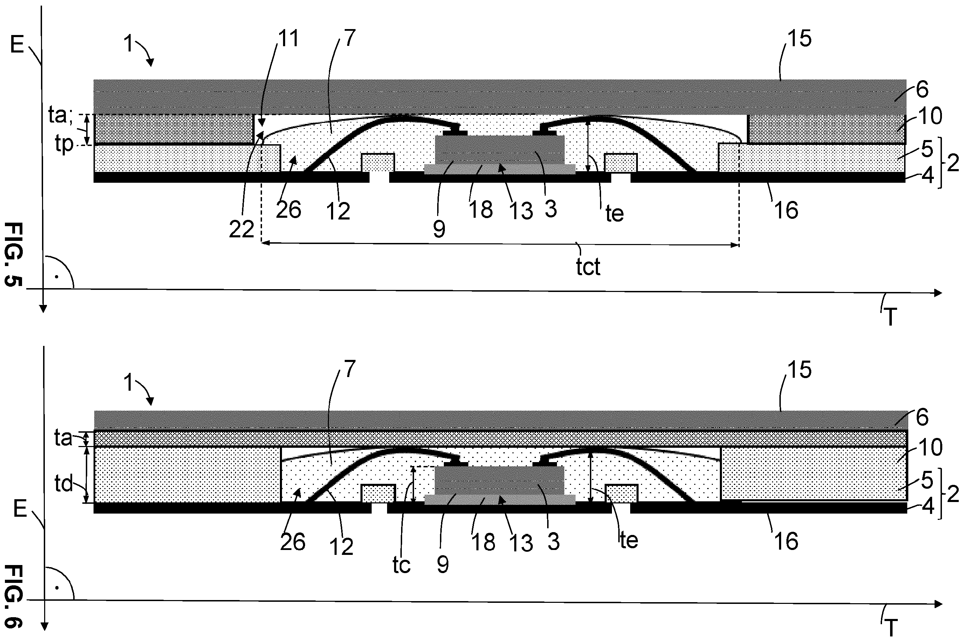

As mentioned initially, the card body layer 6 is laminated to the reel tape 2, in particular onto the dielectric layer 5 of the reel tape 2. To this end it is possible to directly laminated the first card body layer 6 to the dielectric layer 5 without using an adhesive element. However, it is likewise conceivable to indirectly laminated the card body layer 6 onto the dielectric layer 5 via an adhesive element 10 as it is shown in the depicted examples. In figures 2-4 and 6, said adhesive element 10 is a continuous layer that continuously extends across the electronic chips 3 as well as between the card body layer 6 and the dielectric layer 5 with respect to the longitudinal direction L and the transverse direction T. However, and as follows from figure 5, the adhesive element 10 can likewise be an intermittent layer comprising apertures 11 being arranged along the transverse direction T as well as along longitudinal direction L of the reel tape 2 and furthermore at least partially congruent with the electronic chips 3 when seen along the extension direction E.

As follows from figure 2, a bump 20, i.e. a deformation or a protrusion can be formed in and/or by the card body layer 6 as a result of the encapsulation element 7 pressing against a bottom side 21 of the card body layer 6, whereupon the bump 20 is formed in and/or by the card body layer 6. As a result, a top side 17 of the card body layer 6 protrudes towards an outside of the data carrier 1. Said top side 17 being here the bottom side 15 of the smart card 1.

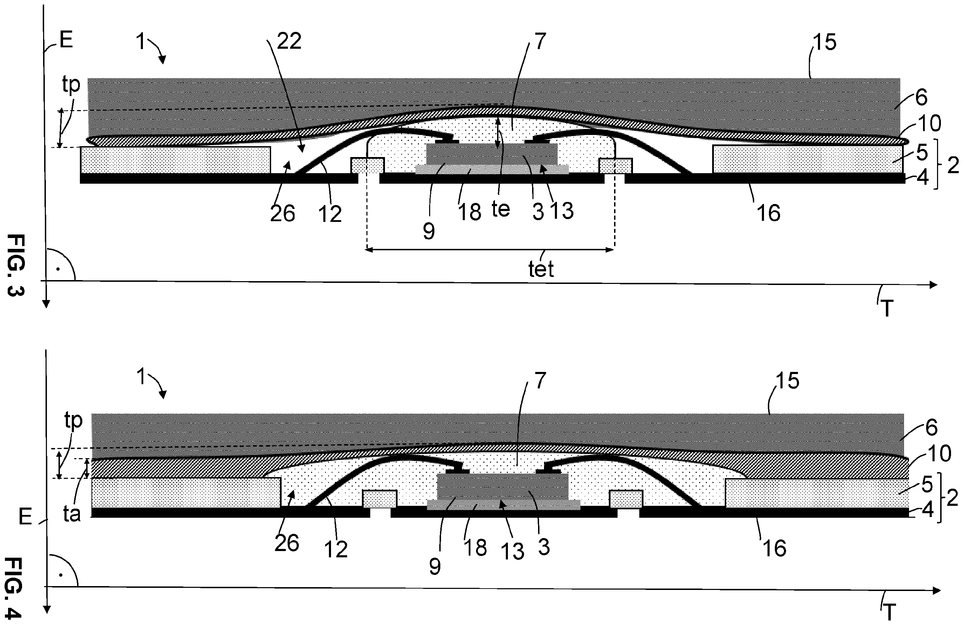

With respect to figures 3 to 6 various ways of minimizing said bump will be explained.

Namely, figure 3 depicts an embodiment wherein the encapsulation element 7 is of a small thickness te when seen along the extension direction E. In fact, the thickness te of the encapsulation element 7 above the electronic chip 3 is smaller than a thickness tp of the electronic packaging being arranged above the dielectric layer 5 of the reel tape 2 with respect to the extension direction E. The encapsulation element 7 is furthermore of a small thickness tet when seen along the transverse direction T and the longitudinal direction L. That is, and as follows from figure 3, the encapsulation element 7 does not extend all the way from the electronic chip 3 to the dielectric layer 5. Instead, a gap 22 is formed between the dielectric layer 5 and the encapsulation element 7. This minimization of the spatial expansion of the encapsulation element 7 can be achieved by providing the encapsulation element 7 such as the resin only on the bottom sides 9 of the electronic chips 3 facing the electrically conductive layer 4. Furthermore, in the depicted embodiment, the card body layer 6 was heated during its lamination to the reel tape 2 to a temperature being in the range of or greater than its glass-transition temperature. By heating the card body layer 6 close to or above its glass-transition temperature during the lamination process softens the card body layer 6 or renders the card body layer 6 deformable, whereby a bump that would otherwise be formed is minimized or even prevented since said card body layer 6 can fit with a shape of the bump.

Figure 4 depicts an embodiment wherein a thickness ta of the adhesive element 10 with respect to the extension direction E equals the thickness tp of the electronic packaging being arranged above the dielectric layer 5 of the reel tape 2 with respect to the extension direction E. By using an adhesive element 10 having a thickness ta that equals to or is larger than a thickness tp of the electronic packaging being arranged above the dielectric layer 5 with respect to the extension direction E, a bump that would otherwise be formed in the card body layer 6 by the encapsulation element 7 in the absence of said adhesive element 10 is prevented. That is, the thickness ta of the adhesive element 10 with respect to the extension direction E can be seen as incorporating and/or swallow the bump. As furthermore follows from figure 4, the thickness ta of the adhesive element 10 with respect to the extension direction E varies when seen along the longitudinal direction L as well as when seen along the transverse direction T. In fact, the thickness ta of the adhesive element 10 in the region of the dielectric layer 5 is larger than the thickness ta of the adhesive element 10 in the region of the electronic chips 3.

Figure 5 likewise discloses an embodiment wherein a thickness ta of the adhesive element 10 with respect to the extension direction E equals the thickness tp of the electronic packaging being arranged above the dielectric layer 5 of the reel tape 2 with respect to the extension direction E. However, and in contrast to the embodiment of figure 4, the adhesive element 10 of figure 5 is provided as an intermittent layer wherein it comprises apertures 11 in the regions of the electronic modules. That is, the adhesive element 10 is only provided between the card body layer 6 and the dielectric layer 5. These apertures 11 are preferably produced by punching an adhesive element 10 in the form of a hot melt.

Figure 6 discloses an embodiment that comprises a thick dielectric layer 5. In particular, a thickness td of the dielectric layer 5 is larger than a thickness tc of the electronic chips 3 when seen along the extension direction E. By providing the dielectric layer 5 with a thickness td that equals to or is larger than the thickness tc of the electronic chips 3, a protrusion of the electronic chips 3 above the dielectric layer 5 with respect to the extension direction E is prevented. Consequently, a protrusion of the encapsulation element 7 and thus a bump is minimized or even prevented as well

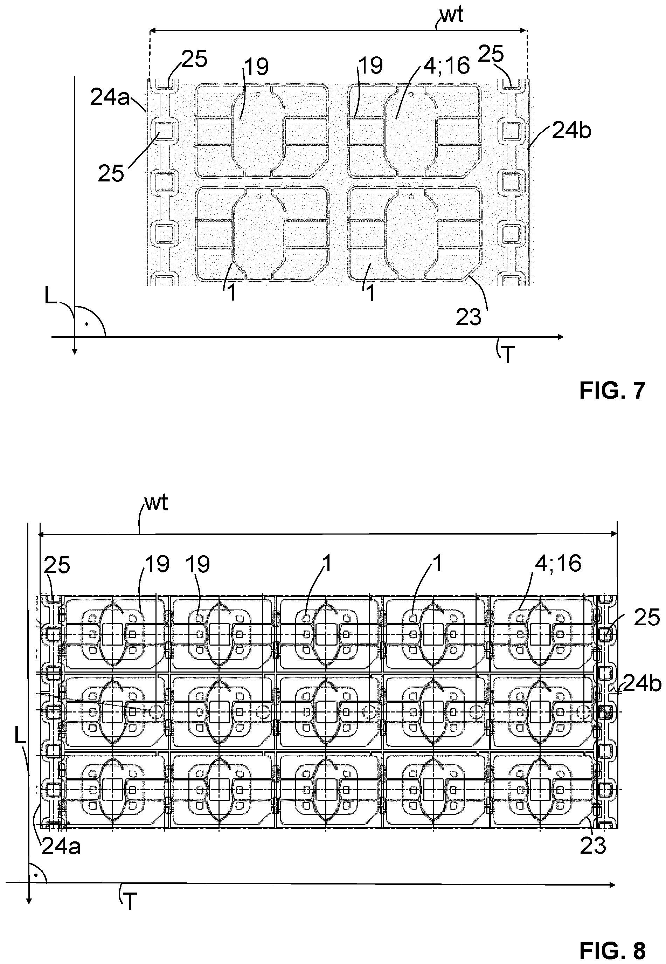

As follows from figures 7 and 8, the electronic chips 3 can be arranged in lines extending along the longitudinal direction L of the reel tape 2. That is, figures 7 illustrate an arrangement of electronic chips 3 in two lines that extend parallel to one another and figure 8 is an example of electronic chips 3 being arranged in five parallel lines with respect to the longitudinal direction L of the reel tape 2. The reel tapes 2 of these figures are single-side reel tapes 2 that already have the dimensions or multiples thereof of the final smart card 1, here of a 4FF SIM. A width wt of the reel tape 2 with respect to the transverse direction T running perpendicularly to the longitudinal direction L of the reel tape 2 in the event of the 4F SIMs thus preferably is 35mm, 70mm or 150mm. As becomes evident from figures 7 and 8, a larger width wt of the reel tape 2 allows to produce a higher density of the smart cards 1 such as the depicted 4FF SIMs. Besides, and as furthermore follows from these figures, the method according to the inventions allows the manufacturing of smart cards 1 including a chamfer 23 in a bottom corner.

Moreover, the reel tape 2 and the card body layer 6 comprise longitudinal sides 24a, 24b extending along the longitudinal direction L, and wherein a plurality of perforations 25 are arranged in the reel tape 2 along the longitudinal direction L of the reel tape 2 and in regions of the longitudinal sides 24a, 24b of the reel tape 2. Also the card body layer 6 can comprise a plurality of perforations being arranged in the card body layer 6 along the longitudinal direction L of the reel tape 2 and in regions of the longitudinal sides of the first card body layer 6 (not visible). The perforations 25 serve the purpose of conveying the reel tape 2 along a transport direction of a module reel and are configured to be engaged by corresponding protrusions of the module reel. To this end figures 7 and 8 depict a reel tape 2 comprising perforations 25 that extend through the electrically conductive layer 4 and the dielectric layer 5 of the reel tape 2 with respect to the extension direction E.

To this end it is noted that different extensions of the card body layer 6 with respect to the transverse direction T are conceivable. For instance, the card body layer 6 can extend along an entire width wt of the reel tape 2 with respect to the transverse direction T. That is, a width of the card body layer 6 corresponds to the width wt of the reel tape 2 when seen along the transverse direction T. In this case the longitudinal sides of the card body are arranged congruent with the longitudinal sides 24a, 24b of the reel tape 2. However, it is likewise conceivable that the width of the card body layer 6 is smaller than the width wt of the reel tape 2 when seen along the transverse direction T. Furthermore, it is conceivable that the card body layer 6 is laminated as a single strip extending along the longitudinal direction L or is laminated as two or more strips. The card body layer 6 being laminated as two or more strips can be understood as the provision of one or more further card body layers, wherein said one or more further card body layers are provided in addition to the card body layer 6. These card body layers 6 can be arranged immediately adjacent to one another or can be arranged laterally spaced from one another when seen along the transverse direction T of the reel tape 2. Any explanations made herein regarding the card body layer 6 likewise apply to the provision of the further card body layers 6.

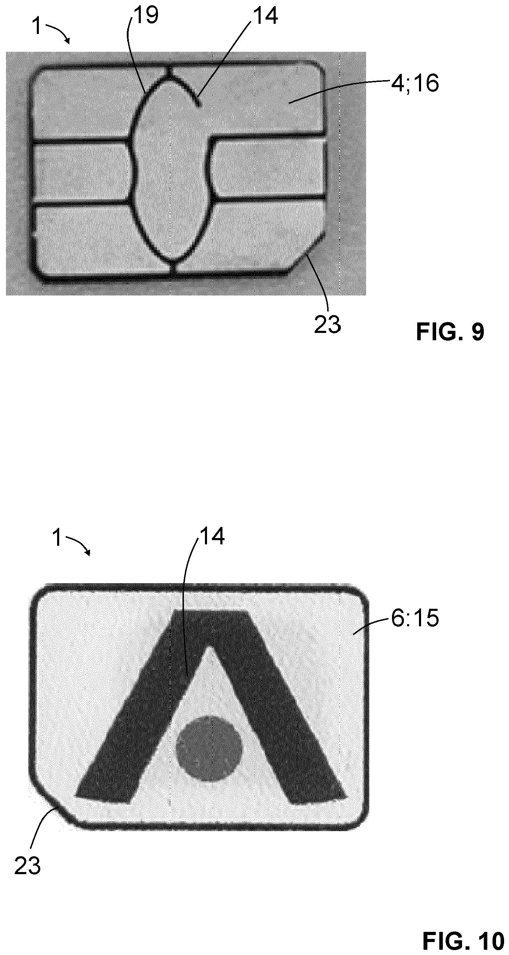

As follows from figures 9 and 10, the invention allows the manufacturing of smart cards 1 comprising electrical and graphical personalization elements 14 that are produced in reel. The contact side of the reel tape 2, i.e. the electrically conductive layer 4, could be customized with the branding of the final customers by etching for example, see figure 9. Figure 10 depicts another example of personalization element 14, wherein a mobile phone operator logo or the like is printed on the bottom side 15 of the SIM card 1 and thus here to the card body layer 6, with inkjet for example. Other examples are a bar code or QR code being printed or marked by laser.

After the plurality of smart cards 1 are produced in reel, they are singulated, whereby the individual smart cards 1 comprising a single electronic chip 3 and as depicted in figures 9 and 10 are obtained. That is, in a preferably final step of the method according to the invention singulation of the smart cards 1 is done so as to remove the individual smart cards 1 from the reel. The singulation serves the purpose of obtaining the individual smart cards 1 in the desired format or size, for instance in the x and y final SIM dimension being in conformity with ETSI, i.e. 12.3mm x 8.8mm. The singulation can be done with laser, milling routing, punch, waterjet or other technics that are well-known in the art.

Hence, the present invention allows an environment friendly manufacturing of a smart card 1 such as a SIM with reduced costs since no embedding, no printing, and no separate card body manufacturing is required and which furthermore allows an easier electrical or graphical personalization in reel to reel.

**LIST OF REFERENCE SIGNS**

| | | | |
|---|---|---|---|
| 1 | smart card | 21 | bottom side |
| 2 | reel tape | 22 | gap |
| 3 | electonic chip | 23 | chamfer |
| 4 | electrically conductive layer | 24a, 24b | longitudinal side |
| 5 | dielectric layer | 25 | perforation |
| 6 | card body layer | 26 | bonding hole |
| 7 | encapsulation element | | |
| 8 | top side | L | longitudinal direction |
| 9 | bottom side | E | extension direction |
| 10 | adhesive element | T | transverse direction |
| 11 | aperture | ta | thickness adhesive element |
| 12 | wire | tp | thickness electronic packaging |
| 13 | aperture | | |
| 14 | personalization element | td | thickness dielectric layer |
| 15 | bottom side | tc | thickness electronic chip |
| 16 | top side | te | thickness encapsulation element |
| 17 | top side | | |
| 18 | adhesive element | tet | thickness encapsulation element |
| 19 | contact | | |
| 20 | bump | wt | width reel tape |

## Claims

1. A method of producing a smart card (1) such as a SIM card extending along an extension direction (E), the method comprising the steps of:
- Providing at least one reel tape (2) extending along a longitudinal direction (L), and
- Providing a plurality of electronic chips (3) on the reel tape (2),
wherein the reel tape (2) comprises at least one electrically conductive layer (4) and at least one dielectric layer (5), and
wherein the electronic chips (3) are in connection with the electrically conductive layer (4) of the reel tape (2),
**characterized in that** the method further comprises the step of laminating at least one card body layer (6) to the reel tape (2), and
wherein the card body layer (6) extends entirely across the electronic chips (3) when seen along the longitudinal direction (L).

2. The method according to claim 1, wherein exactly one card body layer (6) is provided.

3. The method according to any one of the preceding claims, wherein the card body layer (6) is a continuous layer and/or wherein the card body layer (6) is free from apertures or the like.

4. The method according to any one of the preceding claims, wherein at least one encapsulation element (7) is provided, wherein the encapsulation element (7) at least partially encapsulates the electronic chips (3) and preferably corresponds to a resin.

5. The method according to claim 4, wherein the encapsulation element (7) is provided on the electronic chips (3) only, in particular on top sides (8) of the electronic chips (3) and/or on bottom sides (9) of the electronic chips (3), or
wherein the encapsulation element (7) extends at least partially along the electronic chips (3) and further at least partially along the dielectric layer (5) and/or the electrically conductive layer (4) when seen along the longitudinal direction (L).

6. The method according to any one of the preceding claims, wherein at least one adhesive element (10) is provided between the card body layer (6) and the reel tape (2) when seen along the extension direction (E), and
wherein the adhesive element (10) preferably is a continuous layer that continuously extends along the longitudinal direction (L) and/or across the electronic chips (3) when seen along the longitudinal direction (L), or
wherein the adhesive element (10) preferably is an intermittent layer comprising a plurality of apertures (11) being arranged along the longitudinal direction (L) and/or at least partially congruent with the electronic chips (3) when seen along the extension direction (E).

7. The method according to claim 6, wherein a thickness (ta) of the adhesive element (10) with respect to the extension direction (E):
- equals to or is larger than a thickness (tp) of an electronic packaging being arranged above the dielectric layer (5) of the reel tape (2) with respect to the extension direction (E), and/or
- is at least 35 micrometer and/or is in the range of 35 micrometer to 200 micrometer, and/or
- varies when seen along the longitudinal direction (L), the thickness (ta) of the adhesive element (10) in the region of the dielectric layer (5) preferably being larger than the thickness (ta) of the adhesive element (10) in the region of the electronic chips (3).

8. The method according to any one of the preceding claims, wherein the card body layer (6) is heated during its lamination to the reel tape (2) to a temperature being in the range of or greater than a glass-transition temperature of the card body layer (6).

9. The method according to any one of the preceding claims, wherein the card body layer (6) is configured to deform and/or comprises or consists of a soft material and/or comprises or consists of at least one elastomer or a foam film.

10. The method according to any one of the preceding claims, wherein a thickness (td) of the dielectric layer (5) equals to or is larger than a thickness (tc) of the electronic chips (3) when seen along the extension direction (E).

11. The method according to any one of the preceding claims, wherein a thickness (tc) of the electronic chips (3) is smaller than a thickness (td) of the dielectric layer (5) with respect to the extension direction (E), and
wherein a thickness (tc) of the electronic chips (3) is preferably smaller than 150 micrometer, more preferably 100 micrometer or less with respect to the extension direction (E).

12. The method according to any one of the preceding claims, wherein the electronic chips (3) are electrically connected to the electrically conductive layer (4) of the reel tape (2) before lamination of the card body layer (6), and/or
wherein the electronic chips (3) are electrically connected to the electrically conductive layer (4) of the reel tape (2) via wire bonding (12) or in a flip chip process.

13. The method according to any one of the preceding claims, wherein the electrically conductive layer (4) is a continuous layer, and/or
wherein the dielectric layer (5) is a continuous layer, the electronic chips (3) being arranged on the dielectric layer (5), or
wherein the dielectric layer (5) is an intermittent layer comprising a plurality of apertures (13), the electronic chips (3) being at least partially arranged within apertures (13) of the dielectric layer (5).

14. The method according to any one of the preceding claims, wherein the plurality of electronic chips (3) are electrically personalized in reel, and/or
wherein a plurality of graphical personalization elements (14) are provided on and/or in the card body layer (6) in reel, the graphical personalization elements (14) are preferably arranged at least partially congruent with the electronic chips (3) when seen along the extension direction (E).

15. The method according to any one of the preceding claims, further comprising the step of singulation, whereby individual smart cards (1) comprising a single electronic chip (3) are obtained, and
wherein the singulation is preferably performed by cutting, laser or grinding and/or in a single steps or in two steps or more.
